# EUROPEAN PATENT APPLICATION

(11) **EP 4 398 147 A1**
(43) Date of publication of application: **10.07.2024**
(21) Application number: 23213133.4
(22) Date of filing: 29.11.2023
(51) Int. Cl.: G06K 15/02, B41J 2/32, B41J 2/355

(54) **COLD TEMPERATURE CONDITION PRINTING FOR A PRINTING APPARATUS**

(30) Priority: 06.01.2023 US 202318151147
(71) Applicant: Hand Held Products, Inc., Fort Mill, SC 29707 (US)
(72) Inventor: MOKHTAR, Noorasykin, Charlotte, 28202 (US); ZHENG, Hao, Charlotte, 28202 (US)
(74) Representative: Haseltine Lake Kempner LLP

(57) **Abstract**

Various embodiments herein relate to performing cold temperature condition printing for a printing apparatus. In this regard, a print job for a printing apparatus to print content on a print media is received. In response to a determination that a temperature associated with the printing apparatus is below a defined temperature threshold level, respective heating elements of a thermal print head of the printing apparatus are excited and/or a platen roller of the printing apparatus is controlled to perform a feed-forward operation associated with the print media and a feed-backward operation associated with the print media. Additionally, the print job for the printing apparatus is executed to print the content on the print media via the thermal print head.

## Description

### TECHNICAL FIELD

Example embodiments of the present disclosure relate generally to a printing apparatus and, more particularly, to cold temperature printing for the printing apparatus.

### BACKGROUND

A typical printer may include a print head that may be configured to print content on print media. For certain printers, the print head may be a thermal print head. However, for certain cold temperature conditions (e.g., less than 0 °C) for a printer, a print media sticking issue may arise where the print media sticks to the print head and/or a platen roller of the printer during a print job for the printer.

### BRIEF SUMMARY

In accordance with an embodiment of the present disclosure, a system comprises a processor and a memory. The memory stores executable instructions that, when executed by the processor, cause the processor to receive a print j ob for a printing apparatus to print content on a print media. In one or more embodiments, the executable instructions, when executed by the processor, also cause the processor to, in response to a determination that a temperature associated with the printing apparatus is below a defined temperature threshold level, excite respective heating elements of a thermal print head of the printing apparatus and/or control a platen roller of the printing apparatus to perform a feed-forward operation associated with the print media and a feed-backward operation associated with the print media. In one or more embodiments, the executable instructions, when executed by the processor, also cause the processor to execute the print job for the printing apparatus to print the content on the print media via the thermal print head.

In accordance with another embodiment of the present disclosure, a method is provided. In one or more embodiments, the method is a computer-implemented method. The method provides for receiving a print job for a printing apparatus to print content on a print media. In one or more embodiments, the method also provides for, in response to a determination that a temperature associated with the printing apparatus is below a defined temperature threshold level, exciting respective heating elements of a thermal print head of the printing apparatus and/or controlling a platen roller of the printing apparatus to perform a feed-forward operation associated with the print media and a feed-backward operation associated with the print media. In one or more embodiments, the method also provides for executing the print job for the printing apparatus to print the content on the print media via the thermal print head.

In accordance with yet another embodiment of the present disclosure, a computer program product is provided. The computer program product comprises at least one computer-readable storage medium having program instructions embodied thereon, the program instructions executable by a processor to cause the processor to receive a print job for a printing apparatus to print content on a print media. In one or more embodiments, the program instructions are also executable by the processor to cause the processor to, in response to a determination that a temperature associated with the printing apparatus is below a defined temperature threshold level, excite respective heating elements of a thermal print head of the printing apparatus and/or control a platen roller of the printing apparatus to perform a feed-forward operation associated with the print media and a feed-backward operation associated with the print media. In one or more embodiments, the program instructions are also executable by the processor to cause the processor to execute the print job for the printing apparatus to print the content on the print media via the thermal print head.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates an example printing apparatus, according to one or more embodiments described herein;
FIG. 2 illustrates another example printing apparatus, according to one or more embodiments described herein;
FIG. 3 illustrates an example, processing device, according to one or more embodiments described herein;
FIG. 4 illustrates an example print job process, according to one or more embodiments described herein;
FIG. 5 illustrates an example thermal print head, according to one or more embodiments described herein; and
FIG. 6 illustrates a flow diagram for performing cold temperature condition printing for a printing apparatus, in accordance with one or more embodiments described herein.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

Unless the context requires otherwise, throughout the specification and claims which follow, the word "comprise" and variations thereof, such as, "comprises" and "comprising" are to be construed in an open sense, that is as "including, but not limited to."

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, one or more particular features, structures, or characteristics from one or more embodiments may be combined in any suitable manner in one or more other embodiments.

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such component or feature may be optionally included in some embodiments, or it may be excluded.

The term "electronically coupled," "electronically coupling," "electronically couple," "in communication with," "in electronic communication with," or "connected" in the present disclosure refers to two or more components being connected (directly or indirectly) through wired means (for example but not limited to, system bus, wired Ethernet) and/or wireless means (for example but not limited to, Wi-Fi, Bluetooth, ZigBee), such that data and/or information may be transmitted to and/or received from these components.

The terms "print media," "physical print media," "paper," and "labels" refer to tangible, substantially durable physical material onto which text, graphics, images and/or the like may be imprinted and persistently retained over time. Physical print media may be used for personal communications, business communications, and/or the like to convey prose expression (including news, editorials, product data, academic writings, memos, and many other kinds of communications), data, advertising, fiction, entertainment content, and illustrations and pictures. Physical print media may be generally derivatives of wood pulp or polymers, and includes conventional office paper, clear or tinted acetate media, news print, envelopes, mailing labels, product labels, and other kinds of labels. Thicker materials, such as cardstock or cardboard may be included as well. More generally, print media may be used to receive ink, dye, or toner, or may be a media whose color or shading can be selectively varied (for example, through selective application of heat, light, or chemicals) to create a persistent visual contrast (in black and white, shades of gray, and/or colors) that can be perceived by the human eye as texts, images, shapes, symbols, or graphics. In exemplary embodiments discussed throughout this document, reference may be made specifically to "paper" or "labels;" however, the operations, system elements, and methods of such exemplary applications may be applicable to media other than or in addition to the specifically mentioned "paper" or "labels."

The terms "printer" and "printing apparatus" refer to a device that may imprint texts, images, shapes, symbols, graphics, and/or the like onto print media to create a persistent, human-viewable representation of the corresponding texts, images, shapes, symbols, graphics, and/or the like. Printers may include, for example, mobile printers.

A typical printer may include a print head that may be configured to print content on print media. For certain printers, the print head may be a thermal print head (TPH). It is often desirable for a printer to operate at certain cold temperature conditions such as temperatures less than 0 °C and as low as -20 °C. However, for certain cold temperature conditions (e.g., less than 0 °C) for a printer and/or when the printer is idle for a period of time, a print media sticking issue may arise where the print media sticks to the print head during a print job for the printer. For example, at certain cold temperature conditions, the print media may stick to a heater line of a thermal print head of the printer and/or the print media may stick to a platen roller of the printer. The print media sticking issue can also result in a feeding issue for the printer where the printer is unable to properly feed the print media, an image compression issue for the printer where print content on the print media is distorted, a print media issue where the print media is damaged due to excess force to remove the print media from a thermal print head or platen roller, and/or another type of issue.

Thus, to address these and/or other issues related to traditional printers, cold temperature condition printing for a printing apparatus is disclosed herein. Various embodiments of the present application relate to a printing apparatus which executes a printing job algorithm to perform cold temperature condition printing. The printing apparatus may be a mobile printer or another type of printer. In various embodiments, in response to a determination that a printing apparatus is associated with a cold temperature condition, the printing apparatus can be configured to pre-heat a thermal print head of the printing apparatus by firing a series of pulses. For example, respective heating elements of the thermal print head can be excited for a defined interval of time (e.g., 5 seconds, 10 seconds, etc.). Additionally, the printing apparatus can be configured to perform a feed-forward operation and a feed-backward operating for print media before start of a print job to break away any printing media sticking. For example, a platen roller of the printing apparatus can be controlled to perform the feed-forward operation and the feed-backward operating for the print media. In response to the feed-forward operation and the feed-backward operating being performed, the printing apparatus can then execute a printing job to print content on the print media. Accordingly, a print media sticking issue where the print media sticks to the thermal print head and/or the platen roller may be resolved prior to executing the print job. Furthermore, printing performance of the printing apparatus and/or print quality for a print job to print content on print media can be improved. Moreover, a number of computing resources to resolve a print media sticking issue for a printing apparatus can be minimized.

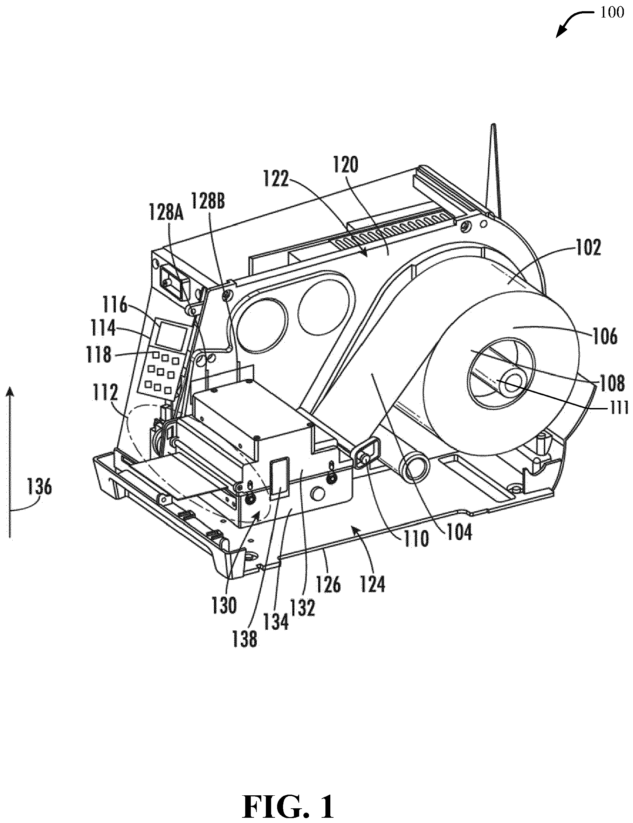

FIG. 1 illustrates an example printing apparatus 100, according to one or more embodiments described herein. While not shown in FIG. 1, the printing apparatus 100 may comprise a power source, as well as a printer cover for housing various components in the interior of the printing apparatus 100. In certain embodiments, the printing apparatus 100 is a mobile printer.

The printing apparatus 100 may include a media supply roll 102. The media supply roll 102 may comprise print media 104 that may be wound on the media supply spool 106. In the example shown in FIG. 1, the printing apparatus 100 may comprise a media supply spindle 108, and the media supply spool 106 may be configured to be disposed on the media supply spindle 108. In one or more embodiments, the printing apparatus 100 may include a platen roller 111 that is controlled to feed the media supply roll 102 via a print engine assembly 130 of the printing apparatus 100. For example, the printing apparatus 100 may control the platen roller 111 to perform a feed-forward operation to feed print media forward through the print engine assembly 130 (e.g., to decrease a size of the media supply roll 102) and/or a feed-backward operation to feed print media backward through the print engine assembly 130 (e.g., to increase a size of the media supply roll 102).

In some examples, the printing apparatus 100 may comprise a media guiding spindle 110, which may be positioned to guide the print media from the media supply roll 102 to travel in a print direction along a print path within the printing apparatus 100. In some examples, the print path may correspond to a path between the media supply spindle 108 to an exit slit 112 along which the print media travels. Further, in some examples, the print direction may correspond to a direction along which the print media travels for the printing operation. In some examples, after texts, graphics, images and/or the like (as applicable) are imprinted on the print media, the print media may exit from the printing apparatus 100 from the exit slit 112.

In some examples, the printing apparatus 100 may comprise one or more motors (not shown) for rotating the media supply spool 106 disposed on the media supply spindle 108 in an anti-clockwise rotational direction, causing the print media to travel in the print direction along the print path. Additionally, or alternatively, the one or more motors may rotate the media guiding spindle 110 in the anti-clockwise rotational direction, causing the print media to travel in the print direction along the print path. Additionally, or alternatively, the one or more motors may rotate the media supply spool 106 and/or the media guiding spindle 110 in a clockwise rotational direction causing the print media to travel in a direction opposite to the print direction.

In some examples, the media supply spindle 108 and/or the media guiding spindle 110 may be eliminated, and the print media 104 may be fed into the printing apparatus 100 through an opening slit, and may exit from the printing apparatus 100 through an exit slit 112.

In some examples, the printing apparatus 100 may include a graphical user interface (GUI) 114 for enabling communications between a user and the printing apparatus 100. The GUI 114 may be communicatively coupled to other components of the printing apparatus 100 for displaying visual and/or auditory information and/or for receiving information from the user (e.g., typed, touched, spoken, etc.).

In the example shown in FIG. 1, the printing apparatus 100 may include the GUI 114 with, for example, a display 116 and a keypad 118. The display 116 may be configured to display various information associated with the printing apparatus 100. The keypad 118 may comprise function buttons that may be configured to perform various typical printing functions (e.g., cancel print job, advance print media, and the like) or be programmable for the execution of macros containing preset printing parameters for a particular type of print media. In some examples, the GUI 114 may be electronically coupled to a controller for controlling operations of the printing apparatus 100, in addition to other functions. The GUI 114 may be supplemented or replaced by other forms of data entry or printer control, such as a separate data entry and control module linked wirelessly or by a data cable operationally coupled to a computer, a router, or the like.

While FIG. 1 illustrates an example GUI 114, it is noted that the scope of the present disclosure is not limited to the example GUI 114 as shown in FIG. 1. In some embodiments, the user interface may be different from the one depicted in FIG. 1. In some embodiments, there may not be a user interface.

Referring back to FIG. 1, the printing apparatus 100 may comprise a back-spine section 120. In some examples, the back-spine section 120 may be made of material having rigid characteristics, such as aluminum alloy, stainless steel, and/or the like. In some examples, the back-spine section 120 may comprise a first surface 122. The first surface 122 may be in a perpendicular arrangement with a surface 124 of a printer base 126.

In some examples, at least one linear guide may be disposed on a surface of an example back-spine section of an example printer body. In some examples, each of at least one linear guide may comprise a corresponding linear rail and a corresponding linear block. In some examples, the corresponding linear rail may be fastened to the first surface of the back-spine section through, for example, bolts, screws, and/or the like. In some examples, the corresponding linear block may be coupled to the corresponding linear rail through, for example, ball bearings, rollers, and/or the like, such that the corresponding linear block may move and/or slide along the corresponding linear rail. Example linear guides may include, but not limited to, rolling element linear motion bearing guides, sliding contact linear motion bearing guides, and/or the like.

For example, in FIG. 1, a first linear guide 128A and a second linear guide 128B may be disposed on the first surface 122. The first linear guide 128A may, for example, comprise a linear rail fastened to the first surface 122 of the back-spine section 120, as well as a corresponding linear block (now shown) that is coupled to the linear rail and movable along the linear rail. Additionally, or alternatively, the second linear guide 128B may comprise a linear rail disposed on the first surface 122 of the back-spine section 120, and a corresponding linear block. In an example embodiment, the first linear guide 128A and the second linear guide 128B are positioned parallel to each other and may be positioned along a vertical axis 136 of the printing apparatus 100.

In some examples, the print engine assembly 130 of the printing apparatus 100 may be coupled to the first linear guide 128A and the second linear guide 128B through the corresponding linear block of the first linear guide 128A and second linear guide 128B, respectively. In an example embodiment, the print engine assembly 130 comprises a top chassis portion 132 and a bottom chassis portion 134. In some examples, the top chassis portion 132 of the print engine assembly 130 may be coupled to the first linear guide 128A and the second linear guide 128B through the corresponding linear block of the first linear guide 128A and second linear guide 128B, respectively. Further, in some examples, as the top chassis portion 132 may move along the linear rail(s) of first linear guide 128A and/or the second linear guide 128B along the vertical axis 136 of the printing apparatus 100.

In some examples, the bottom chassis portion 134 may be fastened to the first surface 122 of the back-spine section 120. In some examples, the bottom chassis portion 134 may be positioned under the top chassis portion 132 in the vertical axis 136 and may be configured to receive the print media from the media supply roll 102.

In some examples, as the top chassis portion 132 may move along the vertical axis 136 along its corresponding travel path, the top chassis portion 132 may reach and/or be positioned at a bottom point of the travel path in the vertical axis 136. When the top chassis portion 132 is positioned at the bottom point, the top chassis portion 132 may be removably coupled to the bottom chassis portion 134 through a latch 138.

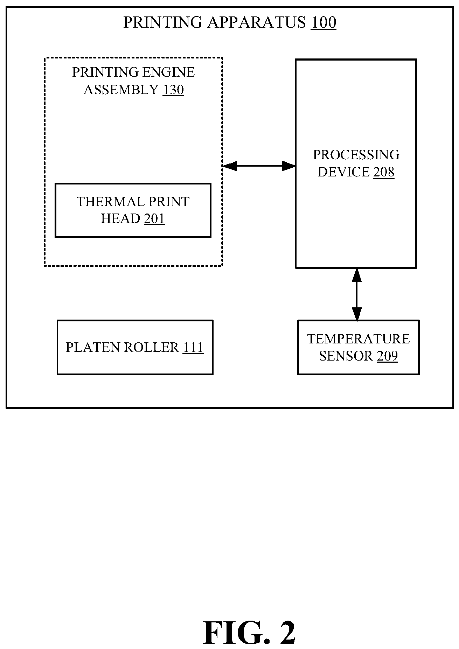

FIG. 2 further illustrates the printing apparatus 100 according to one or more embodiments of the disclosure. An embodiment of the printing apparatus 100 as illustrated in FIG. 2 includes the print engine assembly 130, the platen roller 111, a processing device 208, and/or a temperature sensor 209. In one or more embodiments, the print engine assembly 130 includes a thermal print head 201. The processing device 208 can be configured to execute a printing job algorithm to perform cold temperature condition printing via the printing apparatus 100. In various embodiments, the processing device 208 can execute the printing job algorithm to perform cold temperature condition printing based on the temperature sensor 209. The temperature sensor 209 can be configured to determine a temperature associated with the printing apparatus 100 (e.g., a printing apparatus temperature), an environment associated with the printing apparatus 100 (e.g., an outdoor environment temperature or an indoor environment temperature), and/or a temperature associated with the thermal print head 201 (e.g., thermal print head temperature).

In various embodiments, the processing device 208 can control the thermal print head 201 and/or the platen roller 111 to perform the cold temperature condition printing. For instance, in response to a determination that the temperature sensor 209 indicates a temperature below a defined temperature threshold (e.g., less than 0 °C)), the processing device 208 can be configured to pre-heat the thermal print head 201 by firing a series of pulses. For example, respective heating elements of the thermal print head 201 can be excited for a defined interval of time (e.g., 5 seconds, 10 seconds, etc.). Additionally, the processing device 208 can be configured to perform a feed-forward operation and a feed-backward operating for print media before start of a print job to break away any printing media sticking. For example, the platen roller 111 can be controlled to perform the feed-forward operation and the feed-backward operating for the print media. In response to the feed-forward operation and the feed-backward operating being performed, the processing device 208 can then execute a printing job to print content on the print media. Accordingly, a print media sticking issue where the print media sticks to the thermal print head and/or the platen roller may be resolved prior to executing the print job via the printing apparatus 100.

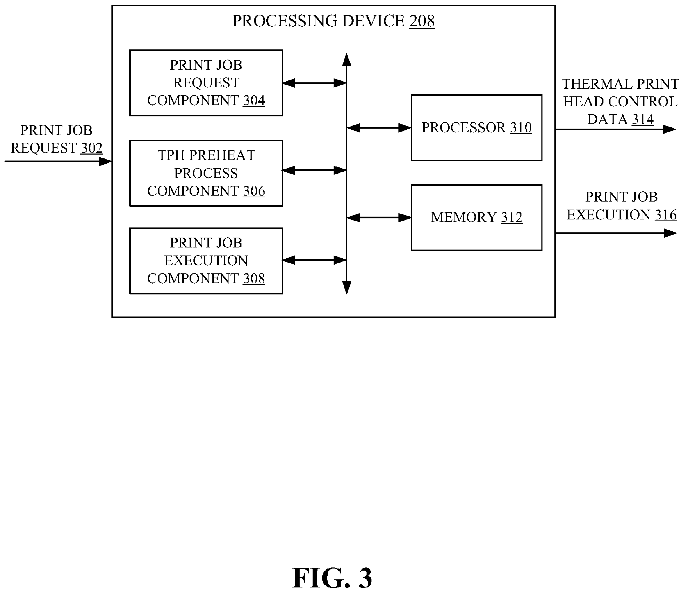

FIG. 3 illustrates an exemplary embodiment of the processing device 208 within which one or more described features of one or more embodiments of the disclosure can be implemented. The processing device 208 can include a print job request component 304, a TPH preheat process component 306 and/or a print job execution component 308. Additionally, in certain embodiments, the processing device 208 can include a processor 310 and/or a memory 312. In certain embodiments, one or more aspects of the processing device 208 (and/or other systems, apparatuses and/or processes disclosed herein) can constitute executable instructions embodied within a computer-readable storage medium (e.g., the memory 312). For instance, in an embodiment, the memory 312 can store computer executable component and/or executable instructions (e.g., program instructions). Furthermore, the processor 310 can facilitate execution of the computer executable components and/or the executable instructions (e.g., the program instructions). In an example embodiment, the processor 310 can be configured to execute instructions stored in the memory 312 or otherwise accessible to the processor 310.

The processor 310 can be a hardware entity (e.g., physically embodied in circuitry) capable of performing operations according to one or more embodiments of the disclosure. Alternatively, in an embodiment where the processor 310 is embodied as an executor of software instructions, the software instructions can configure the processor 310 to perform one or more algorithms and/or operations described herein in response to the software instructions being executed. In an embodiment, the processor 310 can be a single core processor, a multi-core processor, multiple processors internal to the processing device 208, a remote processor (e.g., a processor implemented on a server), and/or a virtual machine. In certain embodiments, the processor 310 can be in communication with the memory 312, the print job request component 304, the TPH preheat process component 306 and/or the print job execution component 308 via a bus to, for example, facilitate transmission of data among the processor 310, the memory 312, the print job request component 304, the TPH preheat process component 306 and/or the print job execution component 308. The processor 310 can be embodied in a number of different ways and can, in certain embodiments, include one or more processing devices configured to perform independently. Additionally, or alternatively, the processor 310 can include one or more processors configured in tandem via a bus to enable independent execution of instructions, pipelining of data, and/or multi-thread execution of instructions. The memory 312 can be non-transitory and can include, for example, one or more volatile memories and/or one or more non-volatile memories. In other words, for example, the memory 312 can be an electronic storage device (e.g., a computer-readable storage medium). The memory 312 can be configured to store information, data, content, one or more applications, one or more instructions, or the like, to enable the processing device 208 to carry out various functions in accordance with one or more embodiments disclosed herein. As used herein in this disclosure, the term "component," "system," "device," and the like, can be and/or can include a computer-related entity. For instance, "a component," "a system," "a device," and the like disclosed herein can be either hardware, software, or a combination of hardware and software. As an example, a component can be, but is not limited to, a process executed on a processor, a processor, circuitry, an executable component, a thread of instructions, a program, and/or a computer entity.

In one or more embodiments, the processing device 208 (e.g., the print job request component 304) can include a print job request 302. The print job request 302 can be a request to perform a print job for the printing apparatus 100 to print content on a print media. The print media can correspond to at least a portion of the media supply roll 102. In response to the print job request 302, the print job request component 304 can determine whether a temperature associated with the printing apparatus 100 is below a defined temperature threshold level. For example, the print job request component 304 can determine whether a temperature reading associated with the temperature sensor 209 is below a defined temperature threshold level. The defined temperature threshold level can define a cold temperature condition for the printing apparatus 100. In an example, the defined temperature threshold level can correspond to 0 °C. However, it is to be appreciated that the defined temperature threshold level can be a different temperature that is higher than or less than 0 °C. In an embodiment, the temperature reading associated with the temperature sensor 209 can correspond to a temperature of the thermal print head 201. In another embodiment, the temperature reading associated with the temperature sensor 209 can correspond to a temperature of an environment (e.g., an indoor environment or an outdoor environment) associated with the printing apparatus 100.

In response to a determination that the temperature associated with the printing apparatus 100 is below the defined temperature threshold level, the TPH preheat process component 306 can perform a TPH preheat process with respect to the thermal print head 201 and/or the platen roller 111. The TPH preheat process component 306 can perform the TPH preheat process with respect to the thermal print head 201 and/or the platen roller 111 based on thermal print head control data 314. For example, the thermal print head control data 314 can correspond to one or more control signals to control the thermal print head 201 and/or the platen roller 111 according to the TPH preheat process. In one or more embodiments, in response to a determination that the temperature associated with the printing apparatus 100 is below the defined temperature threshold level, the TPH preheat process component 306 can excite respective heating elements of the thermal print head 201. To excite the respective heating elements of the thermal print head 201, the TPH preheat process component 306 can apply a defined voltage and/or a defined current to the respective heating elements for a defined interval of time. The defined interval of time can be 5 seconds, 10 seconds, another interval of time less than 5 seconds, or another interval of time greater than 5 seconds. The defined voltage and/or the defined current can correspond to a defined energy level to be applied to the respective heating elements of the thermal print head 201 for the defined interval of time. For example, the defined voltage and/or the defined current can correspond to an energy level associated with a high darkness printing mode for the print job. The high darkness printing mode can result in content being visually dark on the print media and/or can correspond to a highest possible darkness setting for the printing apparatus 100. In certain embodiments, the defined voltage can be predetermined maximum voltage for performing a high darkness printing mode for the print job and/or the defined current can be predetermined maximum current for performing a high darkness printing mode for the print job.

Additionally or alternatively, in response to a determination that the temperature associated with the printing apparatus 100 is below the defined temperature threshold level, the TPH preheat process component 306 can control the platen roller 111 to perform a feed-forward operation associated with the print media and a feed-backward operation associated with the print media. For example, the platen roller 111 can be configured to rotate in a first direction (e.g., a first direction of rotation to feed print media forward) via the feed-forward operation and the platen roller 111 can be configured to rotate in a second direction (e.g., a second direction of rotation to feed print media backward) via the feed-backward operation. The feed-forward operation and the feed-backward operation can feed the print media via a corresponding print media feeding distance associated with the print engine assembly 130. For example, the feed-forward operation can feed the print media forward by 10 dots associated with respective heating elements of the thermal print head 201 and the feed-backward operation and the feed-backward operation can feed the print media backward by 10 dots associated with respective heating elements of the thermal print head 201.

In various embodiments, the TPH preheat process component 306 can excite the respective heating elements of the thermal print head 201 in response to a determination that the printing apparatus 100 is idle for at least a defined interval of time. The printing apparatus 100 may be in an idle where power of the printing apparatus 100 is off and/or power of the printing apparatus 100 is in a low energy mode where power is below a normal power operating condition. Additionally or alternatively, the TPH preheat process component 306 can excite the respective heating elements of the thermal print head 201 in response to a determination that a previous print job for the printing apparatus 100 occurred at an interval of time that is greater than a defined interval of time with respect to receiving the print job request 320. For example, the TPH preheat process component 306 can excite the respective heating elements of the thermal print head 201 in response to a determination that a previous print job for the printing apparatus 100 occurred more than x minutes ago since receiving the print job request 320, where x is an integer or another interval of time. Additionally or alternatively, the TPH preheat process component 306 can excite the respective heating elements of the thermal print head 201 in response to a determination that the print media is present within the print engine assembly 130 of the printing apparatus 100 to, for example, avoid a failure condition associated with the print job request 320.

In response to the TPH preheat process component 306 exciting the respective heating elements of the thermal print head 201 and/or the TPH preheat process component 306 controlling the platen roller 111 to perform the feed-forward operation and the feed-backward operation, the print job execution component 308 can execute the print job for the printing apparatus to print the content on the print media via the thermal print head 201. For example, the print job execution component 308 can generate a control signal such as print job execution 316 to execute the print job associated with the print job request 302.

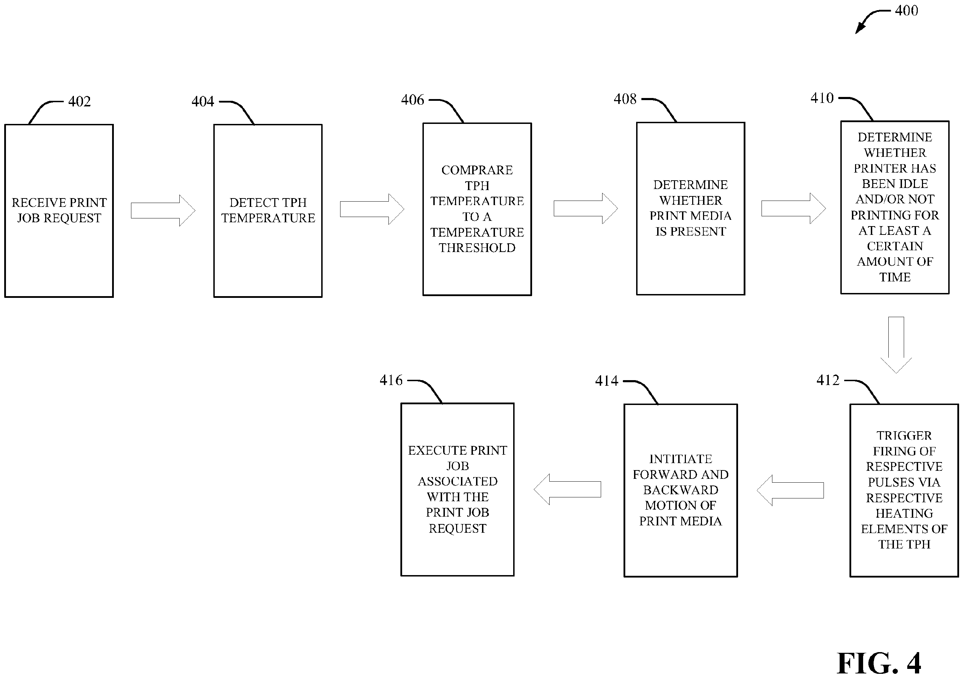

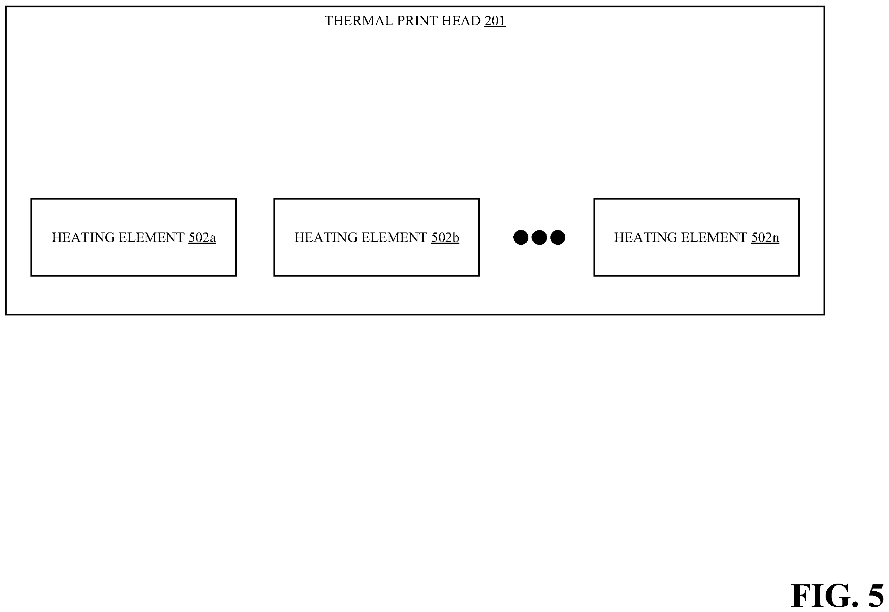

FIG. 4 illustrates an exemplary embodiment of a print job process 400 executed by the processing device 208, according to one or more embodiments of the disclosure. For example, the print job process 400 can correspond to a printing job algorithm for the printing apparatus 100. The print job process 400 can include a step 402 that receives a print job request. The print job request can correspond to the print job request 302, for example. The print job process 400 can additionally or alternatively include a step 404 that detects TPH temperature. For example, a temperature of the thermal print head 201 can be detected. The print job process 400 can additionally or alternatively include a step 406 that compares the TPH temperature to a temperature threshold. For example, it can be determined whether the TPH temperature is below 0 °C. If the TPH temperature is equal to or below the temperature threshold, a print job associated with the print job request can be executed via a printing apparatus. However, if the TPH temperature is below the temperature threshold, the print job process 400 can additionally or alternatively include a step 408 that determines whether print media is present. In response to a determination that print media is not present, the print job request can be canceled and/or denied. However, in response to a determination that print media is present, the print job process 400 can additionally or alternatively include a step 410 that determines whether the printer has been idle and/or not printing for at least a certain amount of time. If no, a print job associated with the print job request can be executed via a printing apparatus. However, if yes, the print job process 400 can additionally or alternatively include a step 412 that triggers firing of respective pulses via respective heating elements of the TPH. For example, as illustrated in FIG. 5, the thermal print head 201 can include a set of heating elements 502a-n that can be respectively triggered with respective pulses. The set of heating elements 502a-n can be, for example, respective resistor elements or other respective heating elements that create heat to facilitate printing of content via print media. In various embodiments, a defined voltage and/or a defined current can be respectively applied to the set of heating elements 502a-n for a defined interval of time to provide the firing of the respective pulses. The print job process 400 can additionally or alternatively include a step 414 that initiates forward and backward motion of print media. For example, the platen roller 111 can be controlled to provide the forward and backward motion of the print media. In response to the step 412 and/or the step 414 being performed, the print job process 400 can additionally or alternatively include a step 416 that executes a print job associated with the print job request. For example, a print job for the printing apparatus can be executed to print the content on the print media via the thermal print head 201.

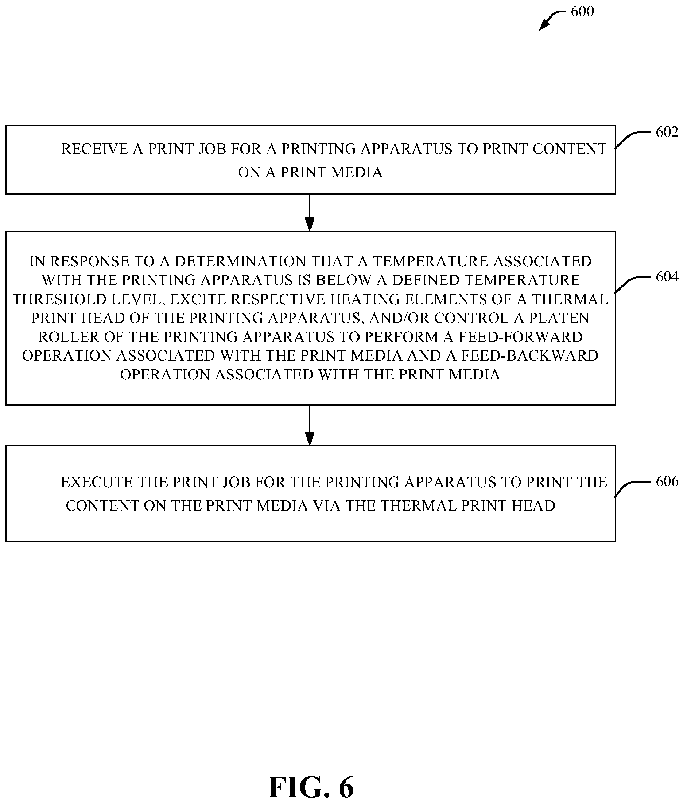

FIG. 6 illustrates a computer-implemented method 600 for performing cold temperature condition printing for a printing apparatus in accordance with one or more embodiments described herein. In one or more embodiments, the computer-implemented method 600 can be employed by the processing device 208. In one or more embodiments, the computer-implemented method 600 begins at step 602 that receives a print job for a printing apparatus to print content on a print media. In one or more embodiments, the computer-implemented method 600 additionally or alternatively includes a step 604 that, in response to a determination that a temperature associated with the printing apparatus is below a defined temperature threshold level, excites respective heating elements of a thermal print head of the printing apparatus and/or controls a platen roller of the printing apparatus to perform a feed-forward operation associated with the print media and a feed-backward operation associated with the print media. In one or more embodiments, exciting the respective heating elements can include applying a defined voltage and/or a defined current to the respective heating elements for a defined interval of time. Additionally or alternatively, in one or more embodiments, exciting the respective heating elements can include exciting the respective heating elements in response to a determination that the printing apparatus is idle for at least a defined interval of time. Additionally or alternatively, in one or more embodiments, exciting the respective heating elements can include exciting the respective heating elements in response to a determination that a previous print j ob for the printing apparatus occurred at an interval of time that is greater than a defined interval of time with respect to receiving the print job. Additionally or alternatively, in one or more embodiments, exciting the respective heating elements can include exciting the respective heating elements of the thermal print head in response to a determination that the print media is present within a printing engine assembly of the printing apparatus. In one or more embodiments, the computer-implemented method 600 additionally or alternatively includes a step 606 that executes the print job for the printing apparatus to print the content on the print media via the thermal print head. For example, executing the print job can include printing the content on the print media via the respective heating elements of the thermal print head.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

The hardware used to implement the various illustrative logics, logical blocks, modules, and circuits described in connection with the aspects disclosed herein may include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor may be a microprocessor, but, in the alternative, the processor may be any processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods may be performed by circuitry that is specific to a given function.

In one or more example embodiments, the functions described herein may be implemented by special-purpose hardware or a combination of hardware programmed by firmware or other software. In implementations relying on firmware or other software, the functions may be performed as a result of execution of one or more instructions stored on one or more non-transitory computer-readable media and/or one or more non-transitory processor-readable media. These instructions may be embodied by one or more processor-executable software modules that reside on the one or more non-transitory computer-readable or processor-readable storage media. Non-transitory computer-readable or processor-readable storage media may in this regard comprise any storage media that may be accessed by a computer or a processor. By way of example but not limitation, such non-transitory computer-readable or processor-readable media may include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media may be referred to herein as a computer program product.

The various embodiments described above can be combined with one another to provide further embodiments. For example, two or more of example embodiments described above may be combined to, for example, improve the safety of laser printing and reduce the risks associated with laser-related accidents and injuries. These and other changes may be made to the present systems and methods in light of the above detailed description. Accordingly, the disclosure is not limited by the disclosure, but instead its scope is to be determined by the following claims.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components may be used in conjunction with the supply management system. Therefore, it is to be understood that the inventions are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

## Claims

1. A system, comprising:
a processor; and
a memory that stores executable instructions that, when executed by the processor, cause the processor to:
receive a print job for a printing apparatus to print content on a print media;
in response to a determination that a temperature associated with the printing apparatus is below a defined temperature threshold level,
excite respective heating elements of a thermal print head of the printing apparatus, and
control a platen roller of the printing apparatus to perform a feed-forward operation associated with the print media and a feed-backward operation associated with the print media; and
execute the print job for the printing apparatus to print the content on the print media via the thermal print head.

2. The system of claim 1, wherein the executable instructions further cause the processor to:
in response to the determination that the temperature associated with the printing apparatus is below the defined temperature threshold level, apply a defined voltage to the respective heating elements for a defined interval of time.

3. The system of any one of claims 1-2, wherein the executable instructions further cause the processor to:
in response to the determination that the temperature associated with the printing apparatus is below the defined temperature threshold level, apply a defined current to the respective heating elements for a defined interval of time.

4. The system of any one of claims 1-3, wherein the executable instructions further cause the processor to:
excite the respective heating elements in response to a determination that the printing apparatus is idle for at least a defined interval of time.

5. The system of any one of claims 1-4, wherein the executable instructions further cause the processor to:
excite the respective heating elements in response to a determination that a previous print job for the printing apparatus occurred at an interval of time that is greater than a defined interval of time with respect to receiving the print job.

6. The system of any one of claims 1-4, wherein the executable instructions further cause the processor to:
excite the respective heating elements of the thermal print head in response to a determination that the print media is present within a printing engine assembly of the printing apparatus.

7. The system of any one of claims 1-6, wherein the feed-forward operation and the feed-backward operation feed the print media via a corresponding print media feeding distance associated with a printing engine assembly.

8. The system of any one of claims 1-7, wherein a defined energy level associated with excitation of the respective heating elements corresponds to an energy level associated with a high darkness printing mode for the print job.

9. The system of any one of claims 1-8, wherein the temperature associated with the printing apparatus corresponds to a thermal print head temperature of the thermal print head.

10. The system of any one of claims 1-9, wherein the printing apparatus is a mobile printer.

11. A method, comprising:
receiving a print job for a printing apparatus to print content on a print media;
in response to a determination that a temperature associated with the printing apparatus is below a defined temperature threshold level,
exciting respective heating elements of a thermal print head of the printing apparatus, and
controlling a platen roller of the printing apparatus to perform a feed-forward operation associated with the print media and a feed-backward operation associated with the print media; and
executing the print job for the printing apparatus to print the content on the print media via the thermal print head.

12. The method of claim 11, wherein the exciting the respective heating elements comprises applying a defined voltage to the respective heating elements for a defined interval of time.

13. The method of any one of claims 11-12, wherein the exciting the respective heating elements comprises applying a defined current to the respective heating elements for a defined interval of time.

14. The method of any one of claims 11-13, wherein the exciting the respective heating elements comprises exciting the respective heating elements in response to a determination that the printing apparatus is idle for at least a defined interval of time.

15. The method of any one of claims 11-13, wherein the exciting the respective heating elements comprises exciting the respective heating elements in response to a determination that a previous print job for the printing apparatus occurred at an interval of time that is greater than a defined interval of time with respect to receiving the print job.
